# EUROPEAN PATENT APPLICATION

(11) **EP 4 765 582 A1**
(43) Date of publication of application: **24.06.2026**
(21) Application number: 24222141.4
(22) Date of filing: 20.12.2024
(51) Int. Cl.: H02K 1/18, H02K 1/30, H02K 3/24, H02K 9/19, H02K 21/26, H02K 1/24

(54) **AXIAL FLUX MACHINE COMPRISING WOUND ROTOR WITH COOLING PATHS FOR COOLING LIQUID**

(71) Applicant: Phi-Power AG, 8330 Pfäffikon ZH (CH)
(72) Inventor: Lampérth, Michael, 8320 Fehraltorf (CH); Pfyffer von Altishofen, Benjamin, 8117 Fällanden (CH)
(74) Representative: Pelster Behrends Patentanwälte PartG mbB

(57) **Abstract**

An axial flux electrical machine (10) comprising: a housing (12) defining an interior (14), a first stator (16a) comprising a first stator core (18a) and first stator elements (20a) like windings, a rotor (22) connected to a shaft (24) and a cooling system with a injector (26) injecting a cooling liquid to the rotor (22). The rotor (22) comprises: a carrier structure (28) connected to the shaft (24), a receiving area (30) as manifold for the cooling liquid and a plurality of coil assemblies (32) arranged radially outwards from the receiving area (30). Each coil assembly (32) comprises two electromagnetic coils (34a, 34b) being spaced apart in axial direction and forming a cooling path (36) therebetween in radial direction. The rotation of the rotor (22) distributes the cooling liquid from the receiving area (30) through the cooling path (36) between coil assemblies (32) to the outer circumference of the rotor.

## Description

The present invention relates to an axial flux electrical machine and a method for operating such an axial flux electrical machine. Furthermore, a vehicle, comprising the respective axial flux electrical machine is disclosed.

Electrical machines that are used as electric motors or generators can convert electrical energy into mechanical energy and vice versa, wherein the underlying physical principles are well known in the art. A broad variety of different technical designs exists for electrical machines, wherein most types operate through the interaction between a magnetic field and electric current in a wire winding to generate mechanical forces. In recent years, electrical machines and their development have attracted a lot of attention, as they play an important role for improving the performance of electric and hybrid vehicles. Enhanced electrical machines could provide a significant contribution for further reducing the dependence on petroleum-based fuels, while at the same time allowing for a more sustainable management of global resources. Correspondingly, comprehensive research was conducted in the field to arrive at improved electrical machines.

Among the electrical machines known in the art, axial flux electrical machines are often considered to be particularly promising, especially in comparison to radial flux electrical machines. An axial flux electrical machine is a motor or generator with at least one rotor and at least one stator in which the magnetic flux between the rotor and the stator is parallel to the axis of rotation of the rotor, so that the magnetic flux in the air gap is parallel to the axis of rotation of the rotor.

Axial flux electrical machines have been used in niche automotive applications for many years, where their shape and compactness offer specific benefits, for example when used as integrated electrical machines for hybrid powertrains. Overall market acceptance for axial flux electrical machines increased over the last decade, as they are known to offer excellent power and torque densities.

The basic concept of axial flux electrical machines is well known in the art, though there are variations with respect to the mechanical and electro-magnetic designs, for example permanent magnet, interior permanent magnet, induction, brushed DC and switched reluctance machines. In principle, axial flux electrical machines can be designed with a single rotor and a single stator (often referred to as "single-sided" design), with a single rotor in between two stators (often referred to as "central rotor" design) or with a single stator in between two rotors (often referred to as "central stator" design). A good introduction into the general technical background and an overview about the knowledge of the skilled person is provided in the article "Assessment of Axial Flux Motor Technology for Hybrid Powertrain Integration" by M. U. Lamperth et al. for the EVS 28 International Electric Vehicle Symposium and Exhibition, Kintex, Korea, May 3-6, 2015.

Among the possible designs of axial flux electrical machines, the use of electromagnetic coils in the rotor is considered to be particularly promising for several applications. In the framework of the present invention, the respective design is also called "separately excited axial flux electrical machines" Unlike in more classical concepts that rely on permanent magnets in the rotor, the separately excited axial flux electrical machines often times offer several advantages, for example with respect to the achievable power density and torque as well as the overall controllability of the axial flux electrical machine, for example by adjusting its properties during operation by manipulating the magnetic flux in the axial flux electrical machine. In particular, separately excited axial flux electrical machines allow for a variable rotor excitation, reducing or eliminating the need for field weakening, allowing for more efficiency over longer speed ranges, and higher peak torques, wherein they grant overall more freedom and potential for efficiency because of the possibility to distribute losses freely between rotor and stator. Furthermore, separately excited axial flux electrical machines face no danger of demagnetization, reduce the need for rare earth materials.

Despite the general advantages of such separately excited axial flux electrical machines, their construction and operation are often times associated with certain problems that still need to be solved. Among these is the problem, that the electromagnetic coils in the rotor need to be effectively cooled, wherein cooling of these electromagnetic coils in the rotating structure is particularly difficult in most cases. Yet, in order to achieve a good power density in kW/kg and to reduce rotor inertia, an efficient rotor cooling is necessary, as otherwise too much copper would be required to obtain a reasonable excitation. In most cases, liquid-based coiling systems will be required, e.g. oil-based cooling systems. However, several of the liquid-based coiling systems of the prior art are oftentimes considered to be lacking with respect to the efficiency of the cooling offered by such systems. Even in cases where the prior art provides for satisfactory cooling, these systems are in most cases still associated with other drawbacks of liquid-based coiling in axial flux electrical machines. One of the main problems is caused by the fact that the cooling liquid will enter into the air gap between the rotating rotor and the stator. The presence of the cooling liquid in the air gap causes friction and can significantly reduce the overall efficiency of the axial flux electrical machine, thereby eliminating a good portion of the general advantages offered by the separately excited axial flux electrical machines in the first place.

It was the primary objective of the present invention to overcome or at least reduce the disadvantages of the prior art.

In particular, it was an objective of the present invention to provide an advantageous axial flux electrical machine that is using electromagnetic coils in the rotor and is allowing for excellent power densities and torque values.

Insofar, it was an important objective of the present invention that the provided axial flux electrical machine should exhibit a beneficial cooling system for enabling efficient cooling, wherein said cooling system should have no or at least very little negative effect on the overall efficiency and power characteristics of the axial flux electrical machine.

It was an additional objective of the present invention that the cooling system of the provided axial flux electrical machine should be very efficient with respect to the amount of required cooling substance.

Furthermore, it was an objective of the present invention that the cooling system should be very robust and allow for reliable cooling of the axial flux electrical machine, even under harsh operational conditions.

Likewise, it was also an objective of the present invention that the cooling system of the provided axial flux electrical machine should be easy to integrate into the typical design of axial flux electrical machines, preferably with a minimal impact on the required installation space of the overall axial flux electrical machines.

Additionally, it was an objective of the present invention that efficient cooling should be achievable without requiring the use of complex electronic components, expensive specialized construction materials like precious metals, or unusual cooling fluids.

It was an overarching objective of the present invention that the provided axial flux electrical machine should be especially reliable and allow for long service life and prolonged safe operation.

It was an additional objective of the present invention that it should be possible to efficiently construct the provided axial flux electrical machines in a time- and cost-efficient manner.

It was a further objective of the present invention to provide for a beneficial method for operating the respective axial flux electrical machines.

It was a secondary objective of the present invention to provide for a beneficial vehicle that employs the respective axial flux electrical machines.

The inventors of the present invention have now found that the above-described objectives can be solved if an axial flux electrical machine is provided that is using electromagnetic coils in the rotor and that exhibits a liquid-based cooling system with an injector for providing the cooling liquid to the rotor, if a specific design of the rotor is employed, wherein the rotor comprises a receiving area for receiving cooling liquid and a plurality of coil assemblies that are arranged radially outwards relative to the receiving area, wherein the coil assemblies each comprise two concentric electromagnetic coils that are spaced apart to form a cooling path between the electromagnetic coils, if the axial flux electrical machine is designed so that the cooling liquid can be delivered from the receiving area radially outwards by the rotation of the rotor towards the coil assemblies and through the cooling path between to cool the electromagnetic coils, as it is defined in the claims.

Surprisingly, the respective design allows for excellent power densities and torque values, wherein the specific cooling system enables highly efficient cooling of the rotor and the coils. By using the rotation of the rotor to transport the cooling liquid radially outward towards the coil assemblies and by routing the flow of cooling liquid through the cooling path between the electromagnetic coils it is possible to at least minimize the amount of cooling liquid that enters the air gap between the rotor and the stator, wherein preferred embodiments are disclosed hereinafter that allow for further reducing the likelihood of cooling liquid in the air gap even further, thus preventing efficiency loss that is caused by the cooling-liquid.

Without wishing to be bound by this comparison, the inventors compare the underlying principle of the flow on the cooling liquid to a radial pump or a radial centrifugal pump with closed impeller and straight blades that is used as pump, wherein the advantageous combination with the specific coil assemblies that offer a cooling path for the cooling liquid in between two electromagnetic coils allow for especially efficient cooling, without bringing the cooling liquid into the air gap. Instead, the cooling liquid that passed through the coil assemblies is thrown radially outward toward the housing, from where it can flow towards the sump or can even be used to support the cooling of the stator.

Using the inventive approach the potential negative effects of a liquid-based cooling system can be almost completely negated or at least significantly reduced. Insofar, the specific layout of the cooling system reliably leads the cooling liquid towards where it is required, thus beneficially reducing the amount of cooling liquid that is required for operation of the axial flux electrical machine. Furthermore, the use of the rotor for guiding the flow of the cooling liquid ensures reliable operation even under harsh operational conditions.

Advantageously, the inventive concept is very space-saving and does not require sophisticated electronics or expensive materials, wherein the cooling system can easily be operated using typical oils that are already used in prior art.

The afore-mentioned objectives are solved by the subject-matter of the present invention as defined in the claims. Hereinafter, the subject-matter of the invention is discussed in more detail, wherein preferred embodiments of the invention are disclosed.

It is particularly preferred to combine two or more of the preferred embodiments to obtain an especially preferred embodiment. Correspondingly, especially preferred is an embodiment, that defines two or more features of preferred embodiments of the present invention. Also preferred are embodiments in which a feature of one embodiment that is to some extent designated as preferred is combined with one or more further features of other embodiments that are designated to some extent as preferred. Features of preferred methods and vehicles result from features of preferred axial flux electrical machines.

Very preferred embodiments of the invention are disclosed in the exemplary embodiments depicted in the figures. Correspondingly, particularly preferred embodiments of the invention combine two or more, preferably three or more, very preferably four or more, of the preferred features of the invention disclosed below, which are also implemented in the exemplary embodiments.

The invention relates to an axial flux electrical machine, comprising:
i) a housing defining an interior of the axial flux electrical machine,
ii) a first stator comprising a first stator core and a plurality of first stator elements, wherein the first stator elements are selected from the group consisting of windings of an electrical conductor and permanent magnets, preferably windings of an electrical conductor,
iii) a rotor that is connected to a shaft and rotatably mounted inside the interior adjacent to the first stator to form a first air gap between the rotor and the first stator, preferably between the rotor and the first stator core, and
iv) a cooling system with at least one injector for providing a cooling liquid to the rotor,
wherein the rotor comprises:
I) a carrier structure that is connected to the shaft,
II) a receiving area for receiving cooling liquid that is provided to the rotor through the injector, and
III) a plurality of coil assemblies that are fixed to the carrier structure and arranged radially outwards relative to the receiving area,

wherein the coil assemblies each comprise two electromagnetic coils that are arranged concentrically to each other and spaced apart along the axial direction of the rotor to form a cooling path between the electromagnetic coils that extends along the radial direction of the rotor,
wherein the axial flux electrical machine is designed so that a cooling liquid can be provided to through the injector to the receiving area of the rotor, and
wherein the axial flux electrical machine is designed so that the rotation of the rotor delivers the cooling liquid from the receiving area radially outwards towards the coil assemblies and through the cooling path of the coil assemblies to cool the electromagnetic coils.

The invention relates to an axial flux electrical machine, wherein the general concept of axial flux electrical machines and the underlying physical principles are well-known to the skilled person.

In agreement with the skilled person's understanding, the axial flux electrical machine of the present invention comprises at least one stationary component, i.e. the stator and at least one rotor.

While one stator can be sufficient for designing the axial flux electrical machine, it will oftentimes be beneficial to employ two stators, typically on both sides of the rotor. Thus, an axial flux electrical machine according to the invention is preferred, wherein the axial flux electrical machine comprises a second stator comprising a second stator core, preferably a second stator core and a plurality of second stator elements, wherein the second stator elements are selected from the group consisting of windings of an electrical conductor and permanent magnets, wherein the rotor is rotatably mounted inside the interior adjacent to the second stator to form a second air gap between the rotor and the second stator, preferably between the rotor and the second stator core.

If two or more stators are employed, it is especially preferred to design both stators mostly similar, for example with respect to the type, number and position of the stator elements or the design of the stator core.

In agreement with the skilled person's understanding at least the first stator comprises a plurality of elements that during operation of the axial flux electrical machine will provide a magnetic field. In the framework of the present invention these elements are called stator elements to clearly distinguish them from the corresponding elements in the rotor but could also be called magnetic elements based on their function. According to the invention, the stator elements are selected from the group consisting of windings of an electrical conductor and permanent magnets, wherein the use of coils and thus windings of an electrical conductor is preferred for almost all embodiments. Thus, these stator elements contribute to the magnetic flux in the axial flux electrical machine.

While the second stator could be designed using the concept of a "passive stator" as e.g. disclosed in EP 3832860 A1, it is preferred to use magnetic elements on both stators.

Generally, an axial flux electrical machine according to the invention is preferred, wherein the first stator comprises four or more, preferably six or more, more preferably eight or more first stator elements, and/or wherein the second stator comprises four or more, preferably six or more, more preferably eight or more second stator elements.

For the stator elements it is in principle conceivable to employ permanent magnets. However, it is preferred for most applications to use windings of an electrical conductor, i.e. electromagnetic coils, in particular as the cooling of the stator is less challenging in most cases. Therefore, an axial flux electrical machine according to the invention is preferred, wherein the first stator elements and/or the second stator elements, preferably the first stator elements and the second stator elements, are windings of an electrical conductor, i.e. electromagnetic coils, and/or wherein the first stator and/or the second stator, preferably the first stator and the second stator, comprise a plurality of windings that are arranged to face the rotor. Suitable windings are well known in the art and consist of windings of an electrical conductor that comprise e.g. copper and/or iron. The windings will be connected to a power source and are used to generate the magnetic fields that drive the electrical machine.

Especially if windings of an electrical conductor, i.e. electromagnetic coils, are used as stator elements, it is expedient to cool the stators. Thus, an axial flux electrical machine according to the invention is preferred, wherein the first stator and/or the second stator, preferably the first stator and the second stator, comprise means for cooling the stator.

The stators comprise a stator core that carries the stator elements. The stator elements, e.g. the windings, are typically arranged on the surface of the stator that faces towards the rotor and are preferably arranged in a symmetric pattern. Insofar, an axial flux electrical machine according to the invention is preferred, wherein the first stator elements are arranged on the first stator in a symmetrical pattern, preferably with C4 rotational symmetry or higher, most preferably C6 rotational symmetry or higher, and/or wherein the second stator elements are arranged on the second stator in a symmetrical pattern, preferably with C4 rotational symmetry or higher, most preferably C6 rotational symmetry or higher.

The first and second stator each comprise a stator core that typically consist of materials that have a low magnetic reluctance, e.g. iron or steel, to allow for the magnetic flux to flow though the stator core, thereby functioning as a stator yoke. The stator elements are preferably arranged on the surface of the stator core or in apertures in the stator core that are designed for housing the stator elements, e.g. in the form of so-called slots. Generally, an axial flux electrical machine according to the invention is preferred, wherein the first stator core and/or the second stator core, preferably the first stator core and the second stator core, are ring-shaped. Additionally or alternatively, an axial flux electrical machine according to the invention is preferred, wherein the first stator core and/or the second stator core, preferably the first stator core and the second stator core comprise or consist of iron or steel. Again additionally or alternatively, an axial flux electrical machine according to the invention is preferred, wherein the first stator and/or the second stator, preferably the first stator and the second stator, comprise a plurality of stator slots for hosting the stator elements, preferably in the form of apertures that allow for at least a partial form fit.

The axial flux electrical machine comprises a housing that is i. a. required to shield the rotor from the environment and designed to prevent unwanted leakage of the cooling liquid into the exterior. As will be described in more detail below, the housing also takes part in forming the fluid path of the cooling liquid in the axial flux electrical machine by guiding the cooling liquid that is thrown out radially from the rotor. Insofar, an axial flux electrical machine according to the invention is preferred, wherein the housing comprises a collection area for collecting cooling liquid that was delivered through the rotating rotor, wherein the collection area preferably comprises means for rerouting the cooling liquid into the cooling system.

While the rotor will always be arranged in the interior of the housing, it can be possible to integrate the stators into the housing. In other words, an axial flux electrical machine according to the invention is preferred, wherein the first stator and/or the second stator, preferably the first stator and the second stator, are connected to the housing, or wherein the first stator and/or the second stator, preferably the first stator and the second stator, are form a part of the housing.

The next important component of the axial flux electrical machine of the present invention is the rotor. In agreement with the skilled person's understanding the rotor is connected to a shaft and rotatably mounted inside the interior adjacent to the first stator to form a first air gap between the rotor and the first stator, preferably the first stator core of the first stator.

Rotatably mounted means that the rotor can rotate around the axis of the shaft. Within the framework of the present invention, the term adjacent needs to be construed to mean that the two elements that are adjacent to each other are arranged in vicinity to each other, without actually being in contact, thereby forming an air gap that is sufficiently broad to allow for a free movement of the components relative to each other, even during operation at high speeds. Typical air gaps between the movable element and the first or second stator are in the range of 0.3 to 2.5 mm. Therefore, the closest distance between the rotor and the first and/or second stator is preferably in the range of 0.3 to 2.5 mm. Preferably, the first and second air gaps between the rotor and the first and second stator, respectively, are essentially of the same size.

Furthermore, within the framework of the present invention, the terms first and second air gap refer to the actual space between the rotor and the first or second stator, respectively, namely the so called mechanical air gap. The mechanical air gap in an electrical machine is the area between the stator and the moving rotor that is filled with a fluid, e.g. a gas or liquid. Typically, if a stator core and a rotor core are employed the air gap is usually formed between said stator core and the rotor core, because the core, that is e.g. formed from steel, will typically be protruding further than e.g. the windings.

The rotor will have to carry the coil assemblies that are discussed in more detail below and will also exhibit a specific receiving area as will be explained in more detail below. For defining the invention in an efficient manner, the underlying base structure that builds the backbone of the rotor and enables the desired functionality is called "carrier structure".

Core parts of the carrier structure are the radially inward parts that are predominantly responsible for connecting the remaining parts of the rotor to the shaft but can also contribute to forming the receiving area. In view of this, the magnetic properties of these inner parts are typically less important than their mechanical properties and their weight respectively. Insofar, an axial flux electrical machine according to the invention is preferred, wherein the rotor comprises a central disc that is connected to the shaft of the rotor, preferably directly connected, wherein the central disc preferably comprises or consists of steel or a fibre-reinforced plastic, preferably a fibre-reinforced plastic, especially preferred a glass fibre-reinforced plastic.

The plurality of coil assemblies will be arranged radially outward to allow for a high torque. In order to ensure good magnetic properties, the carrier structure of the rotor will typically comprise a rotor core in this area that serves a similar purpose as the stator cores discussed above. Thus, relevant for almost all embodiments is an axial flux electrical machine according to the invention, wherein the rotor comprises a rotor core. In this regard, an axial flux electrical machine according to the invention is preferred, wherein the rotor core is arranged radially outward relative to the central disc and connected to the shaft through the central disc. Additionally or alternatively, an axial flux electrical machine according to the invention is preferred, wherein the rotor core is ring-shaped. Additionally or alternatively, an axial flux electrical machine according to the invention is also preferred, wherein the rotor core comprise or consist of iron or steel.

The inventors identified a beneficial way for manufacturing a rotor core for the use in the present invention. The inventors suggest that the rotor core can be manufactured by winding a comparably thin, sheet-like material around a round structure. Advantageously, the winding can be directly made around the central disc to allow for a very efficient process and a good fit between the shape of the rotor core and the shape of the central disc. In view of this, an axial flux electrical machine according to the invention is preferred, wherein the rotor core is formed by winding a metallic sheet material, preferably around the central disc, to obtain a rotor core comprising a multitude of layers, and/or wherein the rotor core comprises a multitude of layers of a metallic sheet material that is arranged in windings, preferably around the central disc.

If the rotor core is manufactured by winding as discussed above, it is necessary to fix the resulting layers of a metallic sheet material in order to prevent the assembly from opening. During the initial stages of development of the present invention the inventors found that the required fixation can be achieved by using fixing means like screws that are driven through the layers along the radial direction and e.g. fixed in the central disk. However, during development it became apparent that the use of adhesive layers between the sheets to supplement or completely substitute other fixing means would be particularly beneficial to obtain a reliable connection, good magnetic properties and a beneficial weight, while further simplifying the manufacturing process. Thus, in principle an axial flux electrical machine according to the invention is conceivable, wherein the multitude of layers of the metallic sheet material are fixed to each other by a plurality of fixing means, preferably screws or bolts, that extend through the layers of the metallic sheet material along the radial direction, wherein the fixing means, are preferably anchored in the central disc. However, an axial flux electrical machine according to the invention is preferred, wherein the multitude of layers of the metallic sheet material are fixed to each other by adhesive layers that are arranged between the layers of the metallic sheet material, wherein the adhesive layers preferably comprise glass fiber layers and an adhesive composition.

The rotor comprises a plurality of coil assemblies that are formed by at least two electromagnetic coils that serve as the magnetic elements of the rotor and are discussed in more detail below. As for the rotor elements of the stators, it is generally preferably to employ a larger number of coil assemblies and to arrange them in a symmetrical pattern. Generally, an axial flux electrical machine according to the invention is preferred, wherein the rotor comprises six or more, preferably eight or more, more preferably ten or more, coil assemblies on one side facing into the axial direction. Additionally or alternatively, an axial flux electrical machine according to the invention is preferred, wherein the coil assemblies are arranged on the rotor in a symmetrical pattern, preferably with C4 rotational symmetry or higher, most preferably C6 rotational symmetry or higher.

The above feature regarding the number of coil assemblies defines the number on one side of the rotor. The reason is that it is in principle sufficient to design the rotor with coil assemblies on just one of the sides. However, the inventors consider it especially preferred for basically all embodiments to employ the specific coil assemblies of the present invention on both sides of the rotor, in particular for obtaining excellent power characteristics. It follows from this preferred arrangement that the advantageous concept for cooling the coil assemblies is enabled on both sides of the rotor to utilize the benefits of the present invention to the full benefit, wherein generally the same preferred features for the coil assemblies and the relevant parts of the carrier structure and the cooling system should be employed on both sides for maximum benefit. Thus, an axial flux electrical machine according to the invention is preferred, wherein the rotor comprises six or more, preferably eight or more, more preferably ten or more, coil assemblies on each side facing the two axial directions. Insofar, an axial flux electrical machine according to the invention is especially preferred, wherein the coil assemblies on each of the sides are in axial alignment with one coil assembly on the other side.

The specific coil assemblies of the present invention will typically be arranged in suitable slots of the rotor, that will in most cases be formed by the rotor core, wherein they will typically have their windings surround the so-called tooth that formed from the rotor an the stator core, respectively. Therefore, an axial flux electrical machine according to the invention is preferred, wherein the rotor comprises a plurality of rotor slots for hosting the coil assemblies, wherein the rotor slots preferably each surround a rotor tooth that protrude along the axial direction. Insofar, an axial flux electrical machine according to the invention is especially preferred, wherein the rotor teeth are wedge-shaped.

In view of this, the skilled person understands that an axial flux electrical machine according to the invention is relevant for most embodiments, wherein the coil assemblies are arranged in the slots of the rotor, wherein the windings of electromagnetic coils are each arranged around one rotor tooth. The skilled person understands that for basically all embodiments an axial flux electrical machine according to the invention will be relevant, wherein the rotor comprises one slot for each coil assembly.

In order to match the preferred number of coil assemblies, an axial flux electrical machine according to the invention is preferred, wherein the rotor comprises six or more, preferably eight or more, more preferably ten or more, rotor slots on one side facing into the axial direction.

As discussed above, it is especially preferred to design the rotor with coil assemblies on both sides. Thus, an axial flux electrical machine according to the invention is preferred, wherein the rotor comprises a plurality of rotor slots for hosting the coil assemblies on each side facing the two axial directions. Especially, an axial flux electrical machine according to the invention is preferred, wherein the rotor comprises six or more, preferably eight or more, more preferably ten or more, rotor slots on each side facing the two axial directions. Specifically, an axial flux electrical machine according to the invention is especially preferred, wherein the rotor slots for hosting the coil assemblies on each of the sides are in axial alignment with one rotor slot on the other side.

If the rotor core is made by winding metallic sheet as describes above the form of the winded material can be predefined with a varying width along the length of the sheet material so that the rotor slots and rotor teeth are formed automatically during the winding process. In particular if the rotor core is made from a solid block, the rotor slots can also be machined into the rotor core. Thus, an axial flux electrical machine according to the invention is preferred for some embodiments, wherein the rotor slots are machined into the rotor core, preferably by milling.

As essential feature of the axial flux electrical machine of the present invention is that rather than permanent magnets or isolated electromagnetic coils, specific assemblies that comprise at least two, preferably exactly two, electromagnetic coils are employed. In case the coil assemblies comprise more than two electromagnetic coils, all of the coils are preferably arranged concentrically to each other and preferably spaced apart along the axial direction of the rotor to form two or more cooling paths between the electromagnetic coils that each extend along the radial direction of the rotor.

The two electromagnetic coils are arranged concentrically to each other and can therefore e.g. be stacked on the same rotor tooth. The skilled person understands that it is preferable with respect to the magnetic field generated by the electromagnetic coils that they are designed with a shape that corresponds to each other, to allow for an undisturbed magnetic flux. In other words, an axial flux electrical machine according to the invention is preferred for almost all embodiments, wherein the two electromagnetic coils of the coil assemblies have at least the same cross-sectional shape, preferably the same cross-sectional shape and the same height in the axial direction, wherein most preferably the two electromagnetic coils of the coil assemblies are essentially identical.

In agreement with the skilled person's understanding, each electromagnetic coil will comprise a plurality of windings, preferably four or more, more preferably six or more. It can be considered an advantage of the present invention that the windings can be made from typical materials. Exemplary is an axial flux electrical machine according to the invention, wherein the electromagnetic coils comprise or consist of one or more conductive material, wherein the one or more conductive material preferably is selected from the group consisting of metals, more preferably copper, aluminum and silver, most preferably copper.

An important aspect of the coil assemblies is that the two electromagnetic coils are spaced apart from each other along the axial direction of the rotor, i.e. generally also the axial direction of the electromagnetic coils, thereby leaving a space between the windings of the two electromagnetic coils that extends between the windings of the two electromagnetic coils and stands essentially perpendicular to the axial direction of the two electromagnetic coils. In the framework of the present invention this clearance between the two electromagnetic coils is called "cooling path" to emphasize that the respective space is designed for the cooling liquid to flow in between the two electromagnetic coils, thereby cooling both electromagnetic coils.

An important aspect is that the two electromagnetic coils can either be supplied with energy through different wiring or can alternatively be connected in serial so that the current flows through the first electromagnetic coil before flowing through the second electromagnetic coil. Expanding on the idea of two electromagnetic coils in serial the skilled person understands that the two electromagnetic coils can also be connected by a short piece of material that is formed from the material of the two electromagnetic coils. In this case, the two electromagnetic coils are formed by two interconnected coil portions of one larger electromagnetic coil structure, wherein the interconnected coil portions are arranged concentrically to each other and spaced apart along the axial direction of the rotor or the larger electromagnetic coil, respectively. Thus, an axial flux electrical machine according to the invention can be envisioned, wherein the two electromagnetic coils for at least a portion of the coil assemblies are for each coil assembly formed by two interconnected coil portions of an electromagnetic coil superstructure, wherein the interconnected coil portions are arranged concentrically to each other and spaced apart along the axial direction of the rotor. However, an axial flux electrical machine according to the invention is preferred in most cases, wherein the wherein the two electromagnetic coils for at least a portion of the coil assemblies are formed by separate electromagnetic coils.

The inventors were able to identify suitable ranges for the distance between the coils, wherein the width of the spacing should be adjusted to allow for an efficient flow of cooling liquid through the cooling path while at the same time making sure that the volume of cooling liquid that shall be provided by the injector per time sufficiently fills the cooling path in order to cool both of the coils. Specifically, an axial flux electrical machine according to the invention is preferred, wherein the electromagnetic coils are spaced apart along the axial direction of the rotor by 0.1 to 1 mm, preferably 0.2 to 0.5 mm, and/or wherein the heights of the cooling path along the axial direction is in the range of 0.1 to 1 mm, preferably 0.2 to 0.5 mm.

To further optimize the cooling efficiency the inventors suggest that the length of the fluid path between the electromagnetic coils of the coil assemblies can be extended, e.g. by designing a labyrinth type structure between the electromagnetic coils. For this, an axial flux electrical machine according to the invention is preferred, wherein the cooling path comprises one or more, preferably two or more, more preferably three or more, guiding elements that are arranged in the cooling path, wherein the guiding elements are designed to guide the flow of the cooling fluid within the cooling path.

In order to optimize the cooling efficiency, the inventors suggest that flat wire coils can be used, thereby obtaining a favorable ratio between surface that is in contact with the cooling liquid and the overall volume of the coil. Correspondingly, an axial flux electrical machine according to the invention is preferred, wherein the electromagnetic coils are flat wire coils, and/or wherein the surface area of the windings of the electromagnetic coils that face into the axial direction is larger than the surface area of said windings facing into the radial direction.

Additionally or alternatively, to ensure sufficient cooling through the coil, an axial flux electrical machine according to the invention is preferred, wherein the electromagnetic coils have a thickness along the axial direction in the range of 1 to 3 mm, preferably 2 to 20 mm, more preferably 3 to 10 mm.

Another important part of the rotor is the so-called "receiving area". The receiving area is destined to receive the cooling liquid that is provided to the rotor. In the most basic embodiment this is merely an area of the carrier structure that lies radially inward relative to the coil assemblies and is conceptually labeled "receiving area" due to its arrangement in the axial flux electrical machine and the fact that the cooling liquid will contact the rotor in the respective area. In the preferred construction of the rotor discussed above, it can for example be envisioned that the receiving area is formed on the central disc.

If the injector that is providing the cooling liquid is spaced apart from the rotor and fixed relative to the rotor and assuming a simple scenario of a basically constant feed of cooling liquid, the rotation of the rotor will result in a basically complete circumferential impact zone, i.e. a circumferential receiving area. Thus, an axial flux electrical machine according to the invention is preferred, wherein the receiving area extends on a surface of the rotor that is facing into the axial direction, preferably around at least 90 % of the circumference, preferably at least 95 % of the circumference, more preferably at least 98 % of the circumference, especially preferably basically 100 % of the circumference.

Having discussed the general structure of the rotor, the concept of the receiving area for receiving the cooling liquid and the specific design of the coil assemblies, an important aspect of the invention can be understood. The axial flux electrical machine is constructed in a way that the rotation of the rotor will deliver the cooling liquid from the receiving area radially outwards towards the coil assemblies and through the cooling path between the electromagnetic coils of the coil assemblies to cool the electromagnetic coils. The skilled person understands that this functional definition introduces some restrictions on the construction of the rotor that ensure that non-functional embodiments can be ruled out. In other words, while there is much flexibility in designing the surface of the rotor, there needs to be a pathway on which the cooling liquid that is pushed outward by the rotation can reach the coil assemblies and enter the cooling path, that e.g. cannot be blocked. The skilled person understands that, in order to efficiently utilize the beneficial concept of the present invention, the design of the axial flux electrical machine according to the invention should be made in a way that as much as possible of the cooling liquid that contacts the rotor in the receiving area should be delivered through the cooling path. Therefore, an axial flux electrical machine according to the invention is preferred, wherein the axial flux electrical machine is designed so that the rotation of the rotor delivers at least 50 %, preferably at least 70 %, more preferably at least 90 %, most preferably at least 95 %, especially preferably basically 100 %, of cooling liquid from the receiving area radially outwards towards the coil assemblies and through the cooling path between the electromagnetic coils of the coil assemblies to cool the electromagnetic coils, relative to the total mass of the cooling liquid.

Having discussed the flow of the cooling liquid on the rotor, it is expedient to focus on the way that the cooling liquid is brought to the rotor in the receiving area. For this, the axial flux electrical machine of the present invention comprises a cooling system with an injector for providing a cooling liquid to the rotor.

In the framework of the present invention a broad understanding of "injector" is applied. As long as the respective element can fulfill the task of providing a cooling liquid it can be considered an "injector", wherein for most cases some type of nozzle will be relevant that is supplied with pressurized cooling liquid.

While in principle one injector could be sufficient, in particular in a fixed injector design, it is preferably to use more injectors. Therefore, an axial flux electrical machine according to the invention is preferred, wherein the cooling system comprises two or more injectors, preferably three or more, more preferably four or more.

The above definition that the axial flux electrical machine is designed so that a cooling liquid can be provided to the receiving area of the rotor results in some structural restrictions for the design of the axial flux electrical machine. Relevant for most embodiments will be an axial flux electrical machine according to the invention, wherein the injectors of the cooling system are spaced apart from the rotor along the axial direction, and/or wherein the injectors of the cooling system are arranged on the same height along the radial direction as the receiving area.

The inventors found that it is preferable that the injector(s) are spaced apart from the rotor along the axial direction and used for injecting cooling liquid onto the rotor orthogonally, i.e. along the axial direction, or with a small angle of incidence. Thus, an axial flux electrical machine according to the invention is preferred, wherein the injectors of the cooling system are arranged to that the cooling liquid can be injected onto the receiving area with an angle of incidence of 45° or less, preferably 30° or less, more preferably 15° or less, most preferably basically 0°.

In principle, it is possible to supply the cooling liquid through the shaft. In this case, the one or more injectors would be rotating together with rotor. It is in principle possible to space the injectors apart from the rotor along the axial direction as well. However, in this case it is preferred to provide the cooling liquid directly into the rotor and thus to the receiving area. This design allows for a very precise application of the cooling liquid into the receiving area, wherein it is even possible that the outlets of the injectors are in contact with the rotor and release the cooling liquid directly into the receiving area. In this case, it is an axial flux electrical machine according to the invention, wherein at least a portion of the injectors, preferably all injectors, are connected to the shaft, wherein the cooling system is preferably designed to supply the cooling liquid to the injectors through the shaft. Despite being more complex this embodiment would allow for a more efficient cooling in a stationary state (non rotating), as the cooling liquid can additionally be pushed by pressure through the cooling path instead of only by rotation rotation.

Yet, according to the assessment of the inventors, supplying the cooling liquid through the shaft and having the injectors included in the rotating system comes with several additional challenges and drawbacks, in particular due to complex fluid management in the rotating shaft as well as due to the additional weight that needs to be rotated. Thus, the inventors consider it an important advantage of the present invention that the inventive concept can be used using stationary injectors that inject the cooling liquid on the rotor that is rotating relative to the injectors. Thus, an axial flux electrical machine according to the invention is especially preferred, wherein the rotor can be rotated relative to the injectors of the cooling system, and/or wherein the injectors of the cooling system are stationary injectors. Insofar, an axial flux electrical machine according to the invention is particularly preferred, wherein the injectors of the cooling system are arranged in the housing and/or the first stator and/or the second stator, preferably the housing.

In agreement with the skilled person's understanding, the cooling system can comprise further typical components, e.g. means for pressure management inside the housing, a reservoir for the cooling liquid or filter elements for filtering the cooling liquid.

As disclosed above, it is particularly beneficial to employ coil assemblies on both sides and correspondingly use the inventive cooling concept on both sides as well. In view of this, an axial flux electrical machine according to the invention is preferred, wherein a portion of the injectors of the cooling system are arranged on each side of the rotor with respect to the axial direction, wherein the rotor comprises a receiving area on each side of the rotor, wherein the rotor comprises coil assemblies on each side of the rotor, wherein the axial flux electrical machine is designed so that a cooling liquid can be provided through the injectors to the receiving area on both sides of the rotor, and wherein the axial flux electrical machine is designed so that the rotation of the rotor delivers the cooling liquid from the receiving area of each side radially outwards towards the coil assemblies on said side and through the cooling path between the coil assemblies to cool the electromagnetic coils on each side.

It can be considered an important advantage of the present invention, that the inventive concept can be realized with a comparably simple rotor design if required, e.g. by arranging the coil assemblies into the rotor slots so that the cooling path is on the same level as the surrounding carrier structure on that the cooling liquid is delivered to the coil assemblies.

However, the inventors found that the advantages of the present invention can be significantly amplified if further structural elements are included that:
i) help to guide the flow of the cooling liquid, and/or
ii) prevent unwanted spill of the cooling liquid, and/or
iii) contribute to isolating the coil assemblies from the conductive parts of the rotor, especially the rotor core; and/or
iv) support the coil assemblies and contribute to safely transferring the centrifugal and torsional forces into the steel structure.

The first of these elements is labeled "receiving structure" and defines a more sophisticated structure in the receiving area. While it is necessary for some designs to keep an opening through that the cooling liquid can be provided to the receiving area, e.g. for embodiments in that the injector(s) are spaced apart axially from the rotor, it is beneficial to at least partially encase the receiving area, so that the injector can inject into a chamber from which the cooling liquid is further transported along the radial direction, thereby reducing the risk of spilling cooling liquid. In other words, an axial flux electrical machine according to the invention is preferred, wherein the receiving area comprises a receiving structure, wherein the receiving structure comprises a hollow element with a receiving chamber, preferably a receiving chamber with an opening for injecting the cooling liquid into the receiving chamber, wherein the receiving structure hinders the flow of cooling liquid away from the rotor along the axial direction, wherein the receiving chamber is in fluid connection with the cooling path of one or more of the coil assemblies in order to allow the cooling liquid to be delivered radially outwardly.

In order to both protect the coils and to prevent a potential spill of the cooling liquid into the axial direction, it is beneficial to put an outer cover on the coil assemblies that might be connected to the receiving chamber. Thus, an axial flux electrical machine according to the invention is preferred, wherein the coil assemblies are at least partially covered with one or more outer cover layers that cover the coil assemblies on the side facing away from the rotor into the axial direction.

For a good isolation of the coil assemblies with respect to the conductive parts of the rotor, as well as for protecting the coils and potentially also shaping the fluid pathway, it is also beneficial to place an inner layer between the coil assemblies and the rest of the rotor. In view of this, an axial flux electrical machine according to the invention is preferred, wherein the coil assemblies are at least partially covered with one or more inner cover layers that cover the coil assemblies on the side facing towards the rotor into the axial direction.

Like the outer cover layer, the inner cover layer can be included into a larger structure and e.g. contribute to forming the receiving structure. Correspondingly, an axial flux electrical machine according to the invention is preferred, wherein the receiving structure is formed by the one or more outer cover layers and the one or more inner cover layers.

As the coil assemblies should still be placed in the rotor slots in most cases and thus should be arranged around the rotor teeth, it is expedient to design the cover layers so that an axial flux electrical machine according to the invention is obtained, wherein the inner cover layer, preferably the outer cover layers and the inner cover layer, comprise apertures for inserting rotor teeth into the electromagnetic coils.

An additional element that is highly beneficial for optimizing the axial flux electrical machine of the present invention is a fixing frame, i.e. a structure that allows to fix the coil assemblies against unwanted movement, especially into the radial or circumferential direction. For example, such a fixing frame can comprise apertures or protrusions that allow for locking the coil assemblies, preferably using a form fit. Thus, an axial flux electrical machine according to the invention is preferred, wherein the coil assemblies are arranged in a fixing frame that prevents movement of the coil assemblies and allows for the transfer of centrifugal and torsional forces into the rotor. Insofar, an axial flux electrical machine according to the invention is especially preferred, wherein the coil assemblies are fixed to the fixing frame with an adhesive and/or by means of a form fit, preferably with an adhesive and by means of a form fit.

All of the additional structural elements can efficiently be made from a broad variety of materials, wherein the selection of materials is made by the skilled person in view of the respective requirement. For example, for the fixing frame the mechanical properties will typically be most relevant, while the inner cover layer will in most cases be a material with a very low electrical conductivity. At the same time, for all of these additional structural elements it is desirable to use light-weight materials. In view of this, the inventors arrived at the conclusion that the use of plastics and in particular the use of fibre reinforced plastics offers the greatest advantages, in particular if the manufacturing effort is taken into consideration as well. Therefore, an axial flux electrical machine according to the invention is preferred, wherein the receiving structure and/or the outer cover layers and/or the inner cover layers and/or the fixing frame, preferably the receiving structure, the outer cover layers, the inner cover layers and the fixing frame, comprise or consist of a polymer-based material, preferably a fibre-reinforced plastic, most preferably a glass fibre-reinforced plastic. Insofar, an axial flux electrical machine according to the invention is especially preferred, wherein the receiving structure and/or the outer cover layers and/or the inner cover layers and/or the fixing frame, preferably at least the inner cover layer and the fixing frame, more preferably the receiving structure, the outer cover layers, the inner cover layers and the fixing frame, comprise or consist of an electrically insulating material.

While the additional structural elements provide benefits in isolation, it is particularly preferred to combine these elements into a larger superstructure. In consequence, an axial flux electrical machine according to the invention is preferred, wherein the fixing frame and at least one of the outer cover layer or the inner cover layer, preferably the fixing frame, the outer cover layer and the inner cover layer, are formed by the same support structure, wherein more preferably the support structure also forms the receiving structure. As the support structure shall again allow for the placement of the coil assemblies on the rotor teeth, an axial flux electrical machine according to the invention is especially preferred, wherein the support structure comprises apertures in the outer cover layer and the inner cover layer for inserting the rotor slots into the electromagnetic coils.

Using the preferred support structure disclosed above, it is possible to pre-arrange the coil assemblies into the respective support structure to form an assembly that is hereinafter labelled sandwich structure. These sandwich structures provide significant advantages in the manufacturing process as they allow for a more convenient handling of the required components as well as an efficient separation of manufacturing steps, wherein the respective sandwich structure only needs to be placed on the underlying parts of the rotor. Furthermore, such a sandwich structure allows for a more efficient handling of the axial flux electrical machine of the present invention during maintenance and repair as major parts of the components can be removed together and subsequently reassembled, wherein the most fragile components are protected inside the sandwich structure. Therefore, an axial flux electrical machine according to the invention is especially preferred, wherein the rotor comprises at least one sandwich structure, comprising a plurality of coil assemblies that are fixed in the fixing frame and at least partially covered with one or more outer cover layers on one side and at least partially covered with one or more inner cover layers on the other side. In this regard, an axial flux electrical machine according to the invention is preferred, wherein the sandwich structure comprises apertures in the outer cover layer and the inner cover layer, wherein the sandwich structure is arranged on the rotor so that the rotor teeth protrude through the electromagnetic coils.

The use of the above disclosed sandwich structures also allows for an efficient stacking, making an axial flux electrical machine according to the invention preferred, wherein the rotor comprises two sandwich structures, wherein the two sandwich structures preferably are spaced apart from each other along the axial direction.

As discussed above, it is especially preferred to use such a sandwich structure on both sides of the rotor. Correspondingly, an axial flux electrical machine according to the invention is especially preferred, wherein the rotor comprises a sandwich structure on side of the rotor facing in the axial direction.

The skilled person understands that the cooling liquid shall be delivered through the coil assemblies in order to transport the heat away. While a more sophisticated pathway for leading the cooling liquid away from the coil assemblies could be designed in theory, it is highly expedient to just have the cooling liquid eject at the end of the cooling path so that the cooling liquid is flung against the housing due to the rotation of the rotor, from where it can simply flow towards a sump. Thus, an axial flux electrical machine according to the invention is preferred for basically all embodiments, wherein the axial flux electrical machine is designed so that the rotation of the rotor delivers the cooling liquid out of the cooling path, wherein the cooling liquid is preferably flung radially outwards towards the housing.

An axial flux electrical machine according to the invention is preferred, wherein the axial flux electrical machine is designed so that cooling liquid that is flung radially outwards towards the housing can partially drop onto the first stator and/or the second stator.

Letting the cooling liquid fling radially outwards towards the housing brings the added benefit that a portion of the cooling liquid can drop from the housing onto the side of the stator. While the share of cooling liquid dropping on the stator will typically be minor, this effect can beneficially contribute to cooling the stators. In order to prevent that the cooling liquid can drop from the side of the stator into the air gap, additional blocking elements can be used, for example ring shaped blocking elements, that are arranged on the side of the stator, wherein the inventors suggest that the same materials are beneficial that are disclosed above for the further structural elements, i.e. in particular plastics. In summary of this aspect, an axial flux electrical machine according to the invention is preferred, wherein the first stator and/or the second stator, preferably the first stator and the second stator, comprise blocking elements that are arranged on the side facing towards the rotor and extend over the edge of the stator, so that the blocking elements prevent the flow of cooling liquid from the lateral surface of the stator towards the rotor along the axial direction.

The above definition of the invention aims to provide a concise definition of the subject-matter of the invention. Yet, the skilled person understands that the axial flux electrical machine of the present invention can comprise the other typical elements that are usually required to operate such machines. Exemplary is an axial flux electrical machine according to the invention, wherein the axial flux electrical machine further comprises:
v) wiring for connecting the electromagnetic coils and the windings with a power source,
   and/or
vi) an electronic control unit for controlling the operation of the axial flux electrical machine.

Additionally or alternatively, in order to enhance the operation of the axial flux electrical machine of the present invention, an axial flux electrical machine according to the invention is preferred, wherein the axial flux electrical machine further comprises:
vii) one or more electronic sensor units for detecting one or more operation parameters of the axial flux electrical machine, for example temperature sensors.

Advantageously, the present invention allows for the design of axial flux electrical machines that can generate large torque and feature very high power to volume ratios. In view of this, it is beneficial to utilize this potential by realizing powerful axial flux electrical machines. Specifically, an axial flux electrical machine according to the invention is preferred, wherein the axial flux electrical machine is designed to generate a maximum torque of 600 Nm or more, preferably 700 nm or more, more preferably 800 nm or more. Additionally or alternatively, an axial flux electrical machine according to the invention is preferred, wherein the axial flux electrical machine has a power to volume ratio of 5 kW/kg or more, preferably 8 kW/kg or more. Likewise, additionally or alternatively, an axial flux electrical machine according to the invention is preferred, wherein the axial flux electrical machine has a torque to volume ratio of 18 Nm/kg or more, preferably 20 Nm/kg or more.

In view of the above, the invention also relates to a method for operating an axial flux electrical machine according to the invention, wherein a cooling liquid is provided to the receiving area of the rotor using the injector, wherein the cooling liquid is delivered from the receiving area radially outwards towards the coil assemblies and through the cooling path between the electromagnetic coils of the coil assemblies to cool the electromagnetic coils.

In this regard, an axial flux electrical machine according to the invention is preferred, wherein the cooling liquid is a dielectric fluid, preferably an oil. Insofar, it is also possible to use cooling liquids that undergo a phase change during the cooling process within the axial flux electrical machine.

Disclosed herein is also a beneficial vehicle, comprising an axial flux electrical machine according to the invention.

Hereinafter, the invention is described in more detail, wherein preferred embodiments of the invention are disclosed with respect to the figures. The figures show:
- Fig. 1: a schematic visualization of a first point during manufacture of a rotor for use in the axial flux electrical machine according to the invention in a preferred embodiment;
- Fig. 2: a schematic visualization of a second point during manufacture of a rotor for use in the axial flux electrical machine according to the invention in a preferred embodiment;
- Fig. 3: a schematic visualization of a third point during manufacture of a rotor for use in the axial flux electrical machine according to the invention in a preferred embodiment;
- Fig. 4: a schematic visualization of a fourth point during manufacture of a rotor for use in the axial flux electrical machine according to the invention in a preferred embodiment;
- Fig. 5: a schematic visualization of a rotor for use in the axial flux electrical machine according to the invention in a preferred embodiment;
- Fig. 6: a schematic visualization of an axial flux electrical machine according to the invention in a preferred embodiment; and
- Fig. 7: a magnification of a part of the axial flux electrical machine of fig. 6.

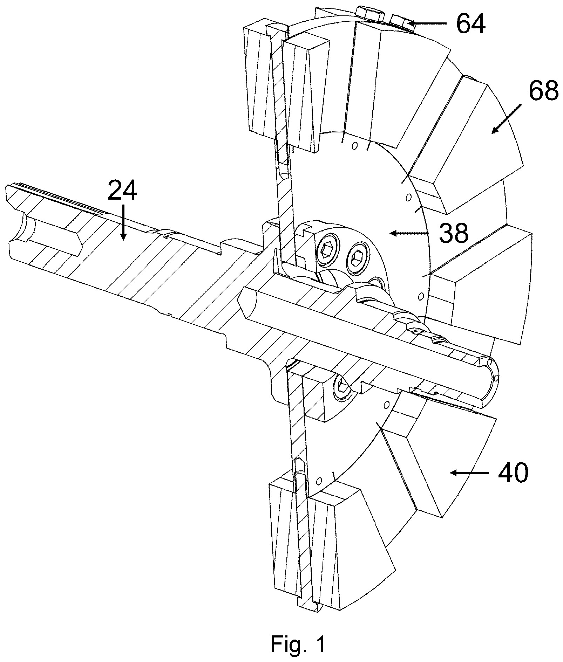

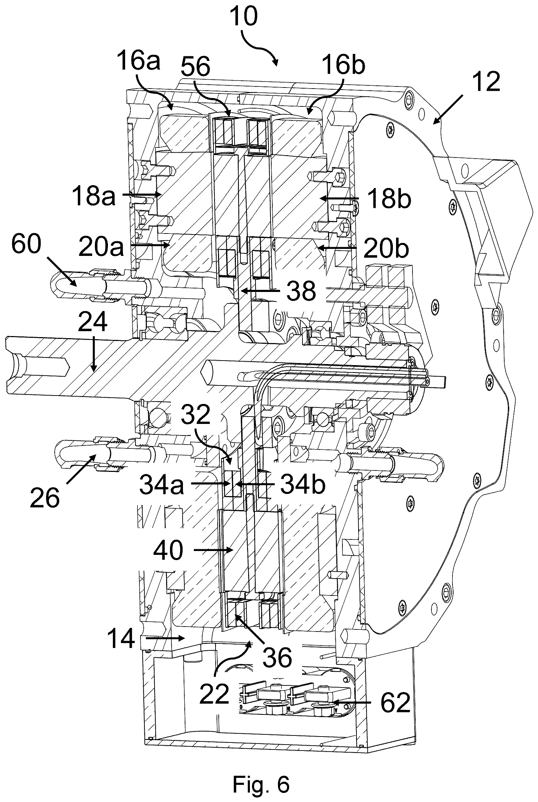

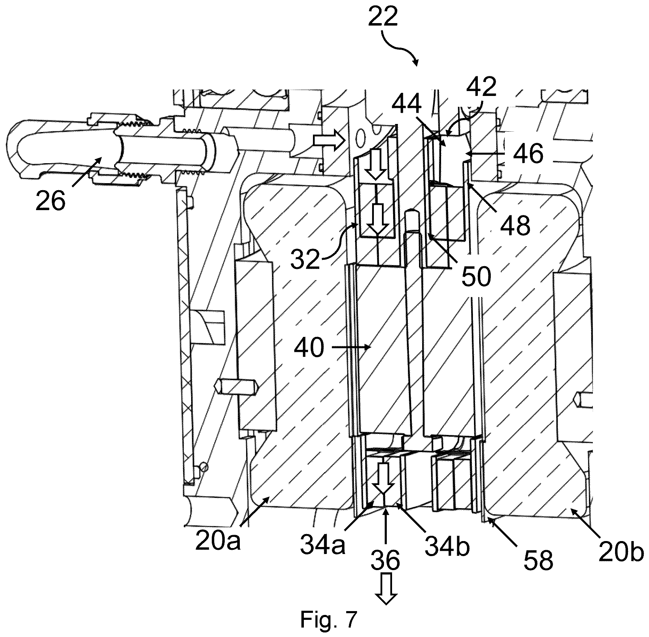

Fig. 1 to fig. 5 depict different point during a potential manufacturing process for a rotor 22 that can be used in an axial flux electrical machine 10 according to the invention, wherein fig. 6 and 7 depict a preferred axial flux electrical machine 10 according to the invention and a magnified part of said axial flux electrical machine 10, respectively.

Fig. 1 shows the underlying parts of the carrier structure 28 that form the rotor 22 as well as the shaft 24 on that the rotor 22 will be movably mounted in the axial flux electrical machine 10.

As can be seen in fig. 1, the shaft 24 is connected to a central disk 38 that could for example be made from steel but preferably consist of a glass-fiber reinforced plastic (GFRP). The central disc 38 is surrounded by a ring-shaped rotor core 40 that exhibits a plurality of rotor tooth 68 that protrude on its surface in both axial directions.

In the embodiment of fig. 1 the magnetically active rotor core 40 is produced by a stamping process from a metallic sheet material, e.g. steel, whose shape is adapted to form the rotor tooth 68 when wound to shape the rotor core 40. The metallic sheet material can directly wound around the central disc 38. In fig. 1 a plurality of screws that extend through the layers of the metallic sheet material along the radial direction and that are anchored in the central disc 38 serve as fixing means 64 for fixing the layers of the metallic sheet material. However, the fixing means 64 can beneficially be supplemented or even substituted by the use of an adhesive, for example by GFRP layers soaked with a foaming glue. This way a self-supporting rotor core 40 can be obtained that does not require additional fixing means 68.

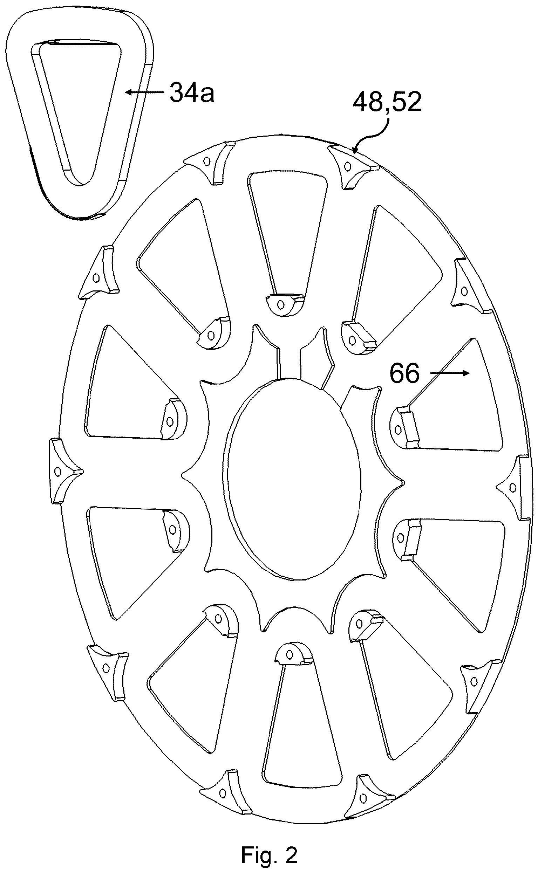

Fig. 2 depicts an electromagnetic coil 34a as well as a first part of what will become a larger support structure 54 that contributes to the carrier structure 28. The electromagnetic coil 34a is a flat wire coil made from copper.

Specifically, fig. 2 shows a structure that serves both as an outer cover layer 48 as well as a fixing frame 52. This combination of the outer cover layer 48 and the fixing frame 52 is made from GFRP and designed to protect the electromagnetic coil 34a, contribute to the electric insulation and serves as a support for the electromagnetic coil 34a in order to transfer the centrifugal and torsional forces into the rest of the carrier structure 28. For this the combination of the outer cover layer 48 and the fixing frame 52 comprises several elements that are designed to allow for a partial form fit with the electromagnetic coil 34a. The outer cover layer 48 comprises a plurality of apertures 66 that will later allow to place the resulting assembly onto the rotor core 40 by introducing the rotor tooth 68 into the center of the electromagnetic coils 34a.

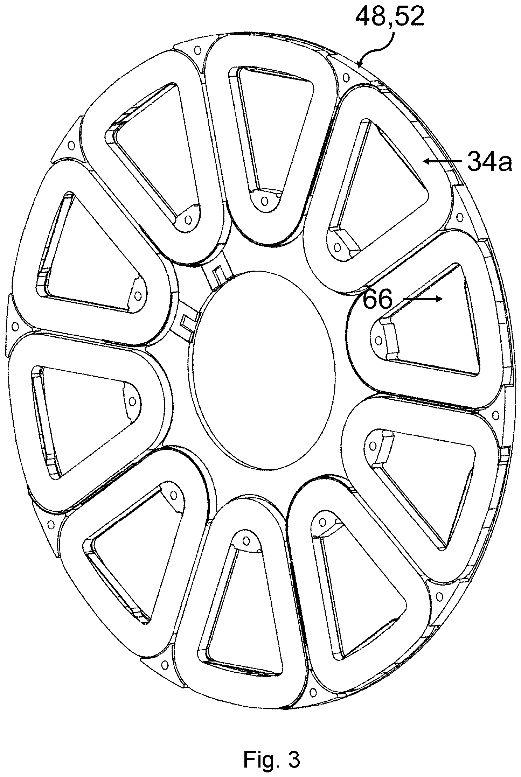

Fig. 3 depicts that ten electromagnetic coils 34a are arranged in the respected places in the combination of the outer cover layer 48 and the fixing frame 52, wherein the electromagnetic coils 34a are preferably fixed to the structure using an adhesive in order to support the fixing obtained by the form fit.

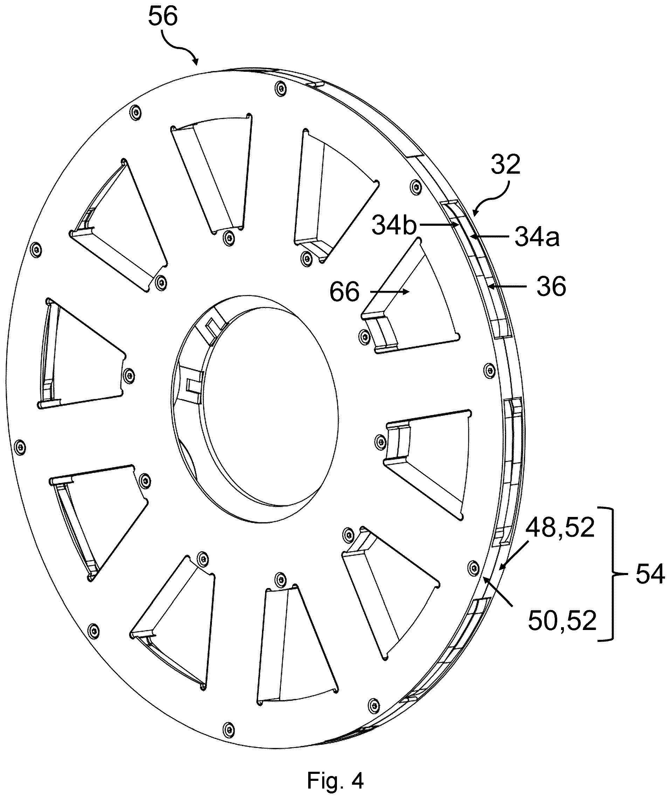

Fig. 4 shows that in a next step two of the assemblies provided in fig. 3 can be combined to form a sandwich structure 56. The two assemblies are arranged so that two electromagnetic coils 34a, 34b of the assemblies are arranged concentrically to form a coil assembly 32. The GFRP components of the two assemblies together form a support structure 54, wherein the combination of the support structure 54 with the ten coil assemblies 32 provides the sandwich structure 56. With respect to the later application, one of the assemblies will contribute the outer cover layer 48 and the other the inner cover layer 50, wherein both assemblies will contribute to the fixing frame 52.

The support structure 54 is designed so that the structure elements of the fixing frame 52 on each of the assemblies are slightly higher than the electromagnetic coils 34a, 34b. Therefore, when combining the two assemblies to form the sandwich structure 56, the electromagnetic coils 34a, 34b will be spaced apart from each other along the axial direction, wherein the spacing in fig. 4 is set to about 0.3 mm. Due to this arrangement of the concentric electromagnetic coils 34a, 34b a cooling path 36 is formed between the electromagnetic coils 34a, 34b through which cooling liquid can flow to cool the electromagnetic coils 34a, 34b.

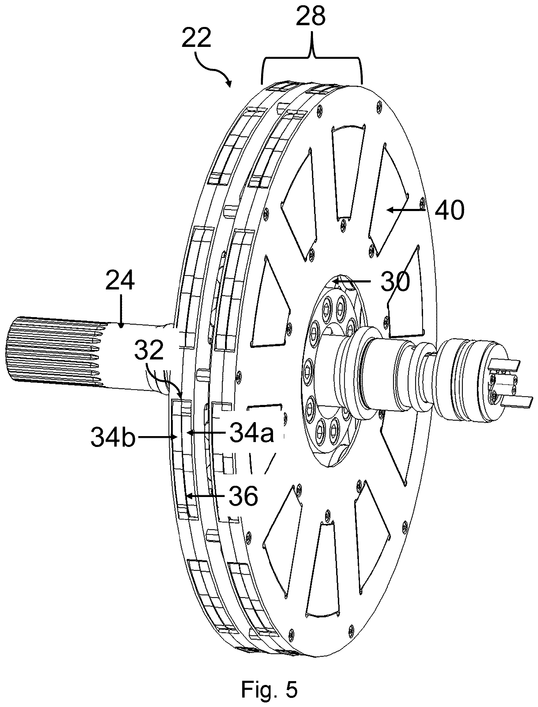

In fig. 5 the resulting component of fig. 1 is combined with two of the sandwich structures 56 of fig. 4 that are placed on both sides to form the rotor 22. The resulting rotor comprises twenty coil assemblies 32 that are fixed in the carrier structure 28 that comprises the central disc 38, the rotor core 40, and the GFRP support structure 54. The coil assemblies 32 on both sides are each in axial alignment with one other coil assembly 32 on the other side, wherein the two sandwich structures 56 are spaced apart from each other through the central disc 38 and the rotor core 40, respectively. It can be seen from fig. 5 that the respective outer cover layer 48 is not completely closed, thereby allowing to access the receiving area 30 of the rotor 22.

Fig. 6. depicts a preferred axial flux electrical machine 10 according to the invention, that comprises a housing 12 that defines an interior 14 of the axial flux electrical machine 10. The axial flux electrical machine 10 has a dual stator design and thus exhibits a first stator 16a with a first stator core 18a and first rotor elements 20a as well as a corresponding second stator 16b with a second stator core 18d and second rotor elements 20b. The first stator 16a and the second stator 16b are designed mostly identical, having steel-based stator cores with a plurality of copper windings that are arranged around stator tooth in stator slots and face towards the rotor 22. Furthermore, each of the first stator 16a and the second stator 16b further comprise means for cooling the respective stator.

In the axial flux electrical machine 10 of fig. 6 the preferred rotor 22 of fig. 5 is rotatably mounted inside the interior 14 adjacent to the first stator 16a to form a first air gap between the rotor 22 and the first stator core 18a as well as adjacent to the second stator 16b to form a second air gap between the rotor 22 and the second stator core 18b.

The axial flux electrical machine 10 comprises a cooling system with two injectors 26 that are arranged on opposite sides of the rotor 22 and allow for injecting a cooling liquid onto the rotor, more specifically the receiving area 30 of the rotor 22, while a pressure equalization 60 allows for the pressure management inside the axial flux electrical machine 10.

Fig. 7 depicts a magnification of a part of the axial flux electrical machine 10 of fig. 6 and facilitates the understanding of the cooling mechanism and the pathway of the cooling liquid, respectively.

The bold arrows in fig. 7 indicate the pathway of the cooling liquid. In the example of fig. 6 and 7 the cooling liquid is an oil that is injected into the interior 14 by the injector 26 and thereby provided to the rotor 22. It can be seen that the outer outer cover layer 48 and the inner cover layer 50 of both sandwich structures 56 extend radially further inward than the coil assemblies 32, so that a receiving chamber 44 is formed as a part of a receiving structure 42. The outer cover layer 48 is shorter than the inner cover layer 50, so that an opening 46 is formed on the side facing the injector 26. Thus, the oil that is injected from the stationary oil injector 26 through the opening 46 hits the rotor 26 in the receiving area 30 that is formed on the surface of the inner cover layer 50 and enters the receiving chamber 44, from where it can enter into the cooling path 36, while the outer cover layer 48 and the inner cover layer 50 that are forming the receiving structure 42 hinder the flow of cooling liquid away from the rotor 22 along the axial direction.

The rotation of the rotor 22 delivers basically all of the oil through the cooling path 36 by pumping it into the radial direction. The oil follows the cooling path 36 that extends on both sides around the rotor tooth 68, thereby cooling the electromagnetic coils 34a, 34b. Because the electromagnetic coils 34a, 34b consist of flat wire the axial thermal conductivity is very high and all turns can be efficiently cooled. From here, the rotation of the rotor 22 delivers the cooling liquid out of the cooling path 36, wherein the cooling liquid is flung radially outwards towards the housing 12 over the entire circumference from where it can get into the collection area 62 and subsequently leave the axial flux electrical machine 10.

Advantageously, there is almost no oil inside the air gaps, avoiding unwanted frictional losses.

The comparably small cooling path 36 between the electromagnetic coils 34a, 34b and the pumping mechanism allow for an efficient cooling with little oil.

Furthermore, minor portions of the oil can drop from the housing 12 onto the sides of the stator and contribute to the cooling of the first stator 16a and second stator 16b, respectively. In order to prevent the flow of cooling liquid from the lateral surface of the stators towards the rotor 22 along the axial direction, the axial flux electrical machine 10 comprises blocking elements 58 on both stators that consist of thin plates that are arranged on the side facing towards the rotor 22 and extend over the edge of the stator.

### Reference Signs

- 10: axial flux electrical machine
- 12: housing
- 14: interior
- 16a: first stator
- 16b: second stator
- 18a: first stator core
- 18b: second stator core
- 20a: first rotor elements
- 20b: second rotor elements
- 22: rotor
- 24: shaft
- 26: injector
- 28: carrier structure
- 30: receiving area
- 32: coil assemblies
- 34a,b: electromagnetic coils
- 36: cooling path
- 38: central disc
- 40: rotor core
- 42: receiving structure
- 44: receiving chamber
- 46: opening
- 48: outer cover layers
- 50: inner cover layer
- 52: fixing frame
- 54: support structure
- 56: sandwich structure
- 58: blocking elements
- 60: pressure equalization
- 62: collection area
- 64: fixing means
- 66: aperture
- 68: rotor tooth

## Claims

1. Axial flux electrical machine (10), comprising:
i) a housing (12) defining an interior (14) of the axial flux electrical machine (10),
ii) a first stator (16a) comprising a first stator core (18a) and a plurality of first stator elements (20a), wherein the first stator elements (20a) are selected from the group consisting of windings of an electrical conductor and permanent magnets,
iii) a rotor (22) that is connected to a shaft (24) and rotatably mounted inside the interior (14) adjacent to the first stator (16a) to form a first air gap between the rotor (22) and the first stator (16a), and
iv) a cooling system with at least one injector (26) for providing a cooling liquid to the rotor (22),
wherein the rotor (22) comprises:
I) a carrier structure (28) that is connected to the shaft (24),
II) a receiving area (30) for receiving cooling liquid that is provided to the rotor (22) through the injector (26), and
III) a plurality of coil assemblies (32) that are fixed to the carrier structure (28) and arranged radially outwards relative to the receiving area (30),
wherein the coil assemblies (32) each comprise two electromagnetic coils (34a, 34b) that are arranged concentrically to each other and spaced apart along the axial direction of the rotor (22) to form a cooling path (36) between the electromagnetic coils (34a, 34b) that extends along the radial direction of the rotor (22),
wherein the axial flux electrical machine (10) is designed so that a cooling liquid can be provided through the injector (26) to the receiving area (30) of the rotor (22), and
wherein the axial flux electrical machine (10) is designed so that the rotation of the rotor (22) delivers the cooling liquid from the receiving area (30) radially outwards towards the coil assemblies (32) and through the cooling path (36) of the coil assemblies (32) to cool the electromagnetic coils (34a, 34b).

2. Axial flux electrical machine (10) according to claim 1, wherein the rotor (22) comprises a central disc (38) that is connected to the shaft (24) of the rotor (22), wherein the central disc (38) preferably comprises or consists of steel or a fibre-reinforced plastic, preferably a fibre-reinforced plastic, especially preferred a glass fibre-reinforced plastic.

3. Axial flux electrical machine (10) according to any one of claims 1 or 2, wherein the rotor (22) comprises a rotor core (40); wherein the rotor core (40) preferably is arranged radially outward relative to the central disc (38) and connected to the shaft (24) through the central disc (38).

4. Axial flux electrical machine (10) according to claim 3, wherein the rotor core (40) is formed by winding a metallic sheet material, preferably around the central disc (40), to obtain a rotor core (40) comprising a multitude of layers, and/or
wherein the rotor core (40) comprises a multitude of layers of a metallic sheet material that is arranged in windings, preferably around the central disc (38).

5. Axial flux electrical machine (10) according to claim 4, wherein the multitude of layers of the metallic sheet material are fixed to each other by adhesive layers that are arranged between the layers of the metallic sheet material, wherein the adhesive layers preferably comprise glass fiber layers and an adhesive composition, and/or wherein the multitude of layers of the metallic sheet material are fixed to each other by a plurality of fixing means (64), preferably screws or bolts, that extend through the layers of the metallic sheet material along the radial direction, wherein the fixing means (64), are preferably anchored in the central disc (38).

6. Axial flux electrical machine (10) according to any one of claims 1 to 5, wherein the rotor (22) comprises six or more, preferably eight or more, more preferably ten or more, coil assemblies (32) on each side facing the two axial directions, wherein the coil assemblies (32) on each of the sides preferably are in axial alignment with one coil assembly (32) on the other side.

7. Axial flux electrical machine (10) according to any one of claims 1 to 6, wherein the electromagnetic coils (34a, 34b) are spaced apart along the axial direction of the rotor (22) by 0.1 to 1 mm, preferably 0.2 to 0.5 mm, and/or wherein the electromagnetic coils (34a, 34b) are flat wire coils.

8. Axial flux electrical machine (10) according to any one of claims 1 to 7, wherein the rotor (22) can be rotated relative to the injectors (26) of the cooling system, and/or wherein the injectors (26) of the cooling system are stationary injectors.

9. Axial flux electrical machine (10) according to any one of claims 1 to 8, wherein the receiving area (30) comprises a receiving structure (42), wherein the receiving structure (42) comprises a hollow element with a receiving chamber (44), wherein the receiving structure (42) hinders the flow of cooling liquid away from the rotor (22) along the axial direction, wherein the receiving chamber (44) is in fluid connection with the cooling path (36) of one or more of the coil assemblies (32a) in order to allow the cooling liquid to be delivered radially outwardly.

10. Axial flux electrical machine (10) according to any one of claims 1 to 9, wherein the coil assemblies (34a, 34b) are at least partially covered with one or more outer cover layers (48) that cover the coil assemblies (34a, 34b) on the side facing away from the rotor (22) into the axial direction, and/or wherein the coil assemblies (32) are at least partially covered with one or more inner cover layers (50) that cover the coil assemblies (32) on the side facing towards the rotor (22) into the axial direction, and/or wherein the coil assemblies (32) are arranged in a fixing frame (52) that prevents movement of the coil assemblies (32) and allows for the transfer of centrifugal and torsional forces into the rotor (22).

11. Axial flux electrical machine (10) according to any one of claims 9 or 10, wherein the receiving structure (42) and/or the outer cover layers (4) and/or the inner cover layers (50) and/or the fixing frame (52), preferably the receiving structure (42), the outer cover layers (48), the inner cover layers (50) and the fixing frame (52), comprise or consist of a polymer-based material, preferably a fibre-reinforced plastic, most preferably a glass fibre-reinforced plastic.

12. Axial flux electrical machine (10) according to any one of claims 1 to 11, wherein the fixing frame (52) and at least one of the outer cover layer (48) or the inner cover layer (50), preferably the fixing frame (52), the outer cover layer (48a) and the inner cover layer (50), are formed by the same support structure (54), wherein more preferably the support structure (54) also forms the receiving structure (42).

13. Axial flux electrical machine (10) according to any one of claims 1 to 12, wherein the rotor (22) comprises at least one sandwich structure (56) comprising a plurality of coil assemblies (32) that are fixed in the fixing frame (52) and at least partially covered with one or more outer cover layers (48) on one side and at least partially covered with one or more inner cover layers (50) on the other side.

14. Axial flux electrical machine (10) according to any one of claims 1 to 13, wherein the first stator (16a) comprises blocking elements (58) that are arranged on the side facing towards the rotor (22) and extend over the edge of the first stator, so that the blocking elements (58) prevent the flow of cooling liquid from the lateral surface of the first stator (16a) towards the rotor (22) along the axial direction.

15. Method for operating an axial flux electrical machine (10) according to any one of claims 1 to 14, wherein a cooling liquid is provided to the receiving area (30) of the rotor (22) using the injector (26), wherein the cooling liquid is delivered from the receiving area (30) radially outwards towards the coil assemblies (32) and through the cooling path (36) between the of the coil assemblies (32) to cool the electromagnetic coils (34a, 34b).
